Europäisches Patentamt

European Patent Office

Office européen des brevets

(19)

(11) Veröffentlichungsnummer: **0 354 981**

**A2**

(12) EUROPÄISCHE PATENTANMELDUNG

(21) Anmeldenummer: 89102984.5

(22) Anmeldetag: 21.02.89

(51) Int. Cl.⁴: **C08G 18/12 , C08G 18/40 , C08G 18/66 , C08G 18/72 , C08G 18/76 , C08G 18/18 , C08G 18/22 , E01C 7/30 , C04B 38/00 , //(C08G18/12, 101:00)**

(30) Priorität: 16.07.88 DE 3824219

(43) Veröffentlichungstag der Anmeldung:
21.02.90 Patentblatt 90/08

(84) Benannte Vertragsstaaten:
AT BE CH DE FR IT LI LU NL

(71) Anmelder: **Firma Carl Freudenberg
Höhnerweg 2-4
D-6940 Weinheim/Bergstrasse(DE)**

(72) Erfinder: **Esswein, Gerd, Dr.
Kurpfalzstrasse 78
D-6701 Maxdorf(DE)**
Erfinder: **Mühlfeld, Horst
Siegfriedring 23
D-6149 Grasellenbach 3(DE)**
Erfinder: **Schuhmacher, Günter, Dr.
Steingasse 11
D-6940 Weinheim(DE)**

(74) Vertreter: **Weissenfeld-Richters, Helga, Dr.
Höhnerweg 2-4
D-6940 Weinheim/Bergstrasse(DE)**

(54) **Verfahren zur Herstellung eines flüssigen Polyurethanharnstoff-Präpolymeren und seine Weiterverarbeitung zu einem offenporigen Reaktionsharzbeton.**

(57) Ein flüssiges Polyurethanharnstoff-Präpolymer wird hergestellt, indem man ein Polyolgemisch, bestehend aus 70 bis 95 Gewichtsteilen eines linearen ε -Polycaprolactons mit einem Molgewicht zwischen 500 und 1000 und aus 5 bis 30 Gewichtsteilen eines linearen Polyethylenglykols mit einem Molgewicht zwischen 300 und 3000, mit 1,8 bis 1,95 Äquivalenten Toluylendiisocyanat umsetzt und das Produkt mit 0,3 bis 0,7 Äquivalenten, bezogen auf das Polyolgemisch, eines zweiten, flüssigen Polyisocyanats verdünnt. Das Produkt kann mit einem Mineralstoffgemisch versetzt und unter Feuchtigkeitseinwirkung zu einem offenporigen Reaktionsharzbeton abbinden gelassen werden.

EP 0 354 981 A2

## Verfahren zur Herstellung eines flüssigen Polyurethanharnstoff-Präpolymeren und seine Weiterverarbeitung zu einem offenporigem Reaktionsharzbeton

Die Erfindung betrifft ein Verfahren zur Herstellung eines flüssigen Polyurethanharnstoff-Präpolymeren und seine Weiterverarbeitung zu einem unter Feuchtigkeit abbindenden, offenporigen Reaktionsharzbeton.

Reaktionsharzbetone sind Werkstoffe, in denen zur Verbesserung der Verarbeitungs- und/oder Gebrauchseigenschaften das hydraulische Bindemittel durch Betonzusatzstoffe auf der Basis von Kunstharzen, insbesondere Reaktionsharzen, ersetzt ist.

Eine wichtige Größe bei der Beurteilung und Schaffung von Straßenbelägen stellt ihre Fähigkeit zur Schallreduzierung von Fahr-, Antriebs- und Rollgeräuschen dar. Zweckmäßig erscheint also ein Straßenbelag, der aus einem offenporigen, gebundenen Haufwerk gebildet ist. Dabei entsteht der weitere Vorteil, daß aufgrund der Offenporigkeit die Wasseraufnahmefähigkeit und damit Dränagewirkung des Belages sehr hoch ist.

Als Fahrbahnbelag im Straßenbau ist daher der an sich bekannte Reaktionsharzbeton denkbar. Dieser härtet schnell aus, kriecht nicht unter Wärme und Last, ist sehr fest, frost- und wärmebeständig und ist reflektierend einfärbbar. Als Bindemittel für die Mineralstoffe sind ungesättigte Polyesterharze, Epoxidharze, Methylmethacrylatharze sowie Polyurethanprodukte bekannt. Es sind jedoch bisher lediglich Anwendungen für die Herstellung von Maschinengestellen in Betracht gezogen worden (Österreichische Kunststoff-Zeitschrift 15 (1984) 1/2, S. 9-10). Eine Verwendung im Straßenbau ist nicht beschrieben.

Die Verwendung eines einkomponentigen Reaktionsharzes als Bindemittel für mineralische Aggregate wird in der DE-A-24 51 393 beschrieben. Darin wird ein Verfahren zur Herstellung eines mit Polyurethan/Polyharnstoff gebundenen Reaktionsharzbetons aufgezeigt, bei dem der anorganische Füllstoff mit einem Polyurethan-Präpolymer gemischt wird. Vor dem Vermischen wird der Füllstoff mit Wasser befeuchtet. Nach dem Vermischen erfolgen das Schäumen und Abbindenlassen, wobei das Gemisch innerhalb seiner Abbindezeit ("eine Strecke weit" ist es "fahrbar") verarbeitet werden muß. Verwendet man das beschriebene Bindemittel jedoch zur Herstellung eines offenporigen Haufwerkes, so hat dies eine äußerst geringe Festigkeit zur Folge, was stets zum Herausbrechen einzelner Füllstoffkörner führt. Eine Verwendung dieses Reaktionsharzes für offenporige Straßendecken ist daher ausgeschlossen.

Die Gestaltung eines offenporigen Reaktionsharzbetons aus offenporigem Haufwerk und polymeren Bindemittel zur Herstellung eines Straßenbelages mußte daher mit den bisherigen Kenntnissen aus dem Stand der Technik scheitern.

Die vorliegende Erfindung hat zur Aufgabe, ein Verfahren zur Herstellung eines lagerstabilen Bindemittels auf Polyurethanharnstoff-Basis für Reaktionsharzbetone anzugeben, dessen Verwendung in offenporigen Haufwerken die obengenannten Festigkeitsverluste nicht zeigt und das diese Betone damit für den Straßenbau geeignet macht, zusammen mit den eingangs genannten Vorteilen dieser Betone.

Gelöst wird diese Aufgabe durch das in Anspruch 1 gekennzeichnete Verfahren zur Herstellung eines flüssigen Polyurethanharnstoff-Präpolymeren und die in den Unteransprüchen angegebene vorteilhafte Weiterverarbeitung zu offenporigen Reaktionsharzbetonen.

Dabei ist es für die Erfindung unwesentlich, daß das Toluylendiisocyanat im Handel meist als Gemisch der 2.4- und 2.6- Isomeren erhältlich ist; denn das Verhältnis dieser Mischungen ist für die vorliegende Erfindung völlig unkritisch.

Als zweites, flüssiges Polyisocyanat eignet sich bevorzugt das aus z.B. der DE-A-24 51 393 bekannte, im Handel erhältliche Roh-MDI, ein Gemisch verschiedener Diphenylmethandiisocyanat-Isomeren (bei einem Anteil der 4,4'-Isomeren von 30 bis 90 %) und Methylenbrücken aufweisender, trifunktioneller Polyphenylisocyanate.

Das erhaltene flüssige, verdünnte Präpolymere wird vorteilhaft in einer Menge von 3 bis 10 Gewichtsteilen auf 100 Gewichtsteile Füllstoffe eingesetzt, um einen offenporigen Reaktionsharzbeton herzustellen.

Als Füllstoffe eignen sich die handelsüblichen Zuschläge, wie Splitte, Kiese oder Sande, Gummigranulat oder Bauschutt. Die Korngröße kann je nach Anwendungszweck bis hinauf zu 64 mm gewählt werden und liegt somit im konventionellen Bereich. Als besonders vorteilhaft haben sich Gemische aus Kies oder Splitt, Sand und Gesteinsmehl erwiesen, wobei diese Stoffe charakterisiert sind in der Technischen Anleitung TL Min-StB 83.

Die Sieblinie des Gemischs wird dabei anhand dem Fachmann geläufigen Tabellen für die Betonherstellung, z.B. der DIN 1045 oder der DIN 4226, derart aufgebaut, daß ein offenporiges Haufwerk entsteht. Dadurch kann das bei der Härtungsreaktion entstehende Gas entweichen, ohne das Gemisch aufzutreiben. Diese Offenporigkeit bewirkt bei erfindungsgemäß gebundenen Straßendecken eine sehr hohe Wasseraufnahme und eine akustische Dämpfung von Verkehrsgeräuschen bis zu 10 dB in dem Frequenzbereich 1 bis 10 kHz.

Das erfindungsgemäß hergestellte Präpolymere ist bei luftdichter Verpackung mehrere Monate lagerstabil. Ihm können ohne Rezepturänderung die in der Reaktionsharzbeton verarbeitenden Industrie bekannten Zusätze, wie Katalysatoren, oberflächenaktive Substanzen, flammhemmende Mittel sowie Farbstoffe, beigemengt werden.

Wegen der unüblichen langen Verarbeitbarkeit werden zwei verschiedene Arbeitstechniken zum Herstellen eines Reaktionsharzbetons möglich: Im ersten Fall werden trockene Mineralstoffe mit dem Präpolymer vorgemischt und an den Ort der Verwendung transportiert. Bei Maßnahmen gegen den Zutritt von Luftfeuchte (Foliensäcke oder luftdicht verschlossene Fässer) ist das Betongemisch unbegrenzt lagerstabil. Im anderen Fall können die Mineralstoffe und das Harz vor Ort im konventionellen Betonmischer gemischt und direkt verbaut werden.

Wegen der Stöchiometrie des Präpolymeren, des Fehlens von Lösungsmitteln und wegen der Möglichkeit der Kaltverarbeitung bleibt dabei die Entstehung schädlicher Dämpfe oder Gerüche gering. Die Arbeiten können somit von ungeschultem Personal in Standardausrüstung vorgenommen werden.

Die Aushärtung des Gemisches aus Präpolymer und Füllstoffen geschieht in bekannter Weise entweder durch die Luftfeuchte allein oder durch Besprühen mit Wasser. Zur Beschleunigung der Härtungsreaktion kann das aufgesprühte Wasser Beschleuniger enthalten, z.B. tertiäre Amine oder Carbonate der Alkali- oder Erdalkalimetalle.

Obwohl die vorliegende Erfindung Reaktionsharzbetone im Straßenbau besonders hervorhebt, ist es selbstverständlich, daß die Verwendung von Aggregaten mit dem Reaktionsharz zur Herstellung von Formteilen, wie Platten oder Zylindern, insbesondere im Maschinenbau, ebenfalls ohne Nachteile möglich ist. Bei der Herstellung solcher Formteile sind keine druckstabilen Formen erforderlich, da durch den offenporigen Aufbau des Haufwerks das bei der Härtungsreaktion entstehende $CO_2$ entweichen kann.

Wegen der guten Haftfähigkeit des erfindungsgemäßen Bindemittels ist auch die Herstellung von Verbunden aus Reaktionsharzbeton und anderen Materialien, z.B. Gips, konventionell gebundenem Beton, Asphalt oder Kunststoff, möglich.

Die folgenden Beispiele sollen die Erfindung näher erläutern. Alle angegebenen Teile sind Gewichtsteile.

Beispiel 1:

900 Gewichtsteile ε-Polycaprolacton mit einem Molgewicht von 540 und 100 Teile Polyethylenglykol mit einem Molgewicht von 600 werden mit 592 Gewichtsteilen Toluylendiisocyanat bei Raumtemperatur gemischt und 30 Minuten gerührt. Es entsteht ein gelbes Präpolymer mit einer Viskosität von 100 000 mPa•s und 8,2 % NCO-Gehalt. Danach werden 242 Gewichtsteile flüssiges Roh-MDI zugegeben und weitere 10 Minuten gerührt. Man erhält ein braunes, fast geruchloses Präpolymer, dessen Viskosität 24 000 mPa•s beträgt und das einen NCO-Gehalt von 11 % aufweist.

50 Gewichtsteile dieses Präpolymeren werden zu einem Mineralstoffgemisch gegeben, bestehend aus 850 Gewichtsteilen Splitt 2/5, 100 Gewichtsteilen Natursand 0/2 und 50 Gewichtsteilen Kalksteinmehl, und in einem Zwangsmischer 5 Minuten verrührt. Das resultierende teigartige Gemisch ist unter Feuchtigkeitsausschluß in verschlossenen Foliensäcken oder luftdichten Fässern unbegrenzt lagerfähig.

Zur Verarbeitung vor Ort wird das Gemisch aus dem Behälter oder der Mischmaschine auf einen konventionellen Unterbau aus Schottern aufgegossen in einer Schichtdicke von 2 cm. Die Aushärtung ist nach 24 Stunden soweit abgeschlossen, daß der Belag befahrbar ist.

Beispiel 2:

In einer Variante wird die Aushärtungszeit ohne Nachteile auf 5 Stunden verkürzt, indem der Belag besprüht wird mit Wasser, welches den Aminbeschleuniger 1.4-diaza-bicyclo-[2.2.2.] -octan enthält.

Beispiel 3:

930 Gewichtsteile ε-Polycaprolacton (Molgewicht 1000) und 70 Gewichtsteile Polyethylenglykol (Molgewicht 800) werden mit 329 Gewichtsteilen Toluylendiisocyanat wie in Beispiel 1 vermischt. Zu dem entstandenen schwach gelben, wachsartigen Präpolymer (NCO-Gehalt 5,5 %) werden 134 Teile flüssiges

3

EP 0 354 981 A2

Roh-MDI gegeben und weitere 10 Minuten gerührt. Man erhält ein braunes, fast geruchloses Präpolymer mit einer Viskosität von 50 Pa•s und einen NCO-Gehalt von 7,7 %, welches wie in Beispiel 1 oder 2 verarbeitet werden kann.

Der nach Beispiel 1 hergestellte Reaktionsharzbeton wurde auf seine Festigkeit geprüft. Dazu wurde nach der im Betonbau gängigen Prüfmethode gemäß DIN 1164/7 verfahren:

Die Mischung wird in eine Form mit den Abmessungen 160 mm x 40 mm x 40 mm gegossen und mittels eines Stempels etwas verdichtet. Zur Aushärtung wird das Formteil mit Wasser besprüht und 24 Std. bei Raumtemperatur gelagert.

Es ergaben sich die folgenden Fertigkeitswerte:

| Biegefestigkeit | (N/mm$^2$): | 4,8 |
| Biegemodul | (N/mm$^2$): | 450 |
| Druckfestigkeit | (N/mm$^2$): | 6,5 |
| Stauchung beim Bruch | (%): | 5,7 |

Für die Rezeptur des Beispiels 3 wurde als Polyol ε-Polycaprolacton mit einem deutlich höheren Molgewicht ausgewählt. Die wie in Beispiel 1 hergestellten Prüfkörper zeigten deutlich geringere Festigkeiten; hier ist offenbar ein Grenzwert des einsetzbaren Molgewichts erreicht:

| Biegefestigkeit | (N/mm$^2$): | 2,5 |
| Biegemodul | (N/mm$^2$): | 280 |
| Druckfestigkeit | (N/mm$^2$): | 2,4 |
| Stauchung beim Bruch | (%): | 4,1 |

Beispiel 4:

Die Prüfkörper wurden unter Verwendung eines Präpolymeren hergestellt, das aus den gleichen Edukten wie in Beispiel 1 bestand, jedoch in folgendem Mengenverhältnis:

| 700 Gewichtsteile | ε-Polycaprolacton |
| 300 Gewichtsteile | Polyethylenglykol |
| 576 Gewichtsteile | Toluylendiisocyanat |
| 242 Gewichtsteile | Roh-MDI |

Es entstanden hochfeste, offenporige Reaktionsharzbetone:

| Biegefestigkeit | (N/mm$^2$): | 3,7 |
| Biegemodul | (N/mm$^2$): | 320 |
| Druckfestigkeit | (N/mm$^2$): | 4,2 |
| Stauchung beim Bruch | (%): | 3,4 |

Prüfkörper, die nach Beispiel 1 und 4, jedoch jeweils in der Variante des Beispiels 2, hergestellt wurden, ergaben keine von den oben verzeichneten Festigkeiten wesentlich abweichenden Werte. Alle diese Festigkeiten lassen auf das Vorliegen von insbesondere für Straßendecken geeigneten offenporigen Reaktionsharzbetonen schließen, was durch Bau und Erprobung von Teststrecken im Labor wie auch im Gelände bestätigt wurde. Es fand kein Ausbröckeln von Haufwerkteilchen statt; die eingangs genannten Anforderungen an Straßenbeläge wurden erfüllt.

4

Im Gegensatz zu den genannten Beispielen scheitert bei Verwendung eines Reaktionsharzes gemäß DE-A-24 51 393 in einem offenporigen Haufwerk bereits die Herstellung eines Prüfkörpers daran, daß dieser nach der Aushärtung beim Entformen stets zerbricht.

Verwendet man aber die Haufwerke, welche in dieser Druckschrift gefordert sind, nämlich mit durch Reaktionsharz gleich welcher Art überwiegend ausfüllbaren Hohlräumen, so besitzen die entsprechenden Prüfkörper (und damit auch ein Fahrbahnbelag) nach dem Aufschäumen und Abbinden stets eine für den Straßenbau völlig unzureichende Druckfestigkeit unter 1 N/mm².

**Ansprüche**

1. Verfahren zur Herstellung eines flüssigen Polyurethanharnstoff-Präpolymeren, dadurch gekennzeichnet, daß man ein Polyolgemisch, bestehend aus 70 bis 95 Gewichtsteilen eines linearen ε-Polycaprolactons mit einem Molgewicht zwischen 500 und 1000 und aus 5 bis 30 Gewichtsteilen eines linearen Polyethylenglykols mit einem Molgewicht zwischen 300 und 3000, mit 1,8 bis 1,95 Äquivalenten Toluylendiisocyanat unter 30- bis 40-minütigem Rühren vermischt, ausreagieren läßt und das Produkt mit 0,3 bis 0,7 Äquivalenten, bezogen auf das Polyolgemisch, eines zweiten, flüssigen Polyisocyanats verdünnt.

2. Verfahren nach Anspruch 2, dadurch gekennzeichnet, daß man als zweites, flüssiges Polyisocyanat Roh-MDI verwendet.

3. Verfahren nach Anspruch 1 oder 2, dadurch gekennzeichnet, daß man das verdünnte polymere Produkt als Bindemittel solchen anorganischen Füllstoffen zumischt, deren Sieblinie als im Betonbau an sich bekanntes, sogenanntes offenporiges Haufwerk aufgebaut ist, wobei man für das Gewichtsverhältnis Bindemittel:Haufwerk Werte von 3:100 bis 10:100 wählt, und daß man das Gemisch unter Einwirkung von Feuchtigkeit zu einem offenporigen Reaktionsharzbeton abbinden läßt.

4. Verfahren nach Anspruch 3, dadurch gekennzeichnet, daß man das Gemisch mit Wasser besprüht, das ein tertiäres Amin oder ein Alkali- oder Erdalkalicarbonat gelöst enthält.